(19)

Europäisches
Patentamt
European
Patent Office
Office européen
des brevets

(11)  **EP 3 781 400 B1**

(12)  **EUROPEAN PATENT SPECIFICATION**

(45) Date of publication and mention
of the grant of the patent:
**29.01.2025 Bulletin 2025/05**

(21) Application number: **19721338.2**

(22) Date of filing: **03.04.2019**

(51) International Patent Classification (IPC):
$G06T\ 7/40^{(2017.01)}$        $B33Y\ 40/00^{(2020.01)}$
$G01B\ 11/30^{(2006.01)}$       $B29C\ 64/393^{(2017.01)}$
$G01N\ 21/956^{(2006.01)}$      $G01N\ 21/93^{(2006.01)}$
$B22F\ 10/85^{(2021.01)}$       $B33Y\ 10/00^{(2015.01)}$
$B33Y\ 50/02^{(2015.01)}$       $G01N\ 21/01^{(2006.01)}$
$G01N\ 21/88^{(2006.01)}$       $G06T\ 7/00^{(2017.01)}$
$G06T\ 7/90^{(2017.01)}$        $G06V\ 20/69^{(2022.01)}$

(52) Cooperative Patent Classification (CPC):
**G01B 11/30; B22F 10/85; B33Y 10/00; B33Y 50/02;
G01N 21/8806; G01N 21/8851; G06T 7/0004;
G06T 7/41; G06T 7/90; G06V 20/695;** B22F 10/20;
B22F 12/42; B22F 12/90; G01N 2021/0181;
G06T 2207/10024;                          (Cont.)

(86) International application number:
**PCT/GB2019/050955**

(87) International publication number:
**WO 2019/202296 (24.10.2019 Gazette 2019/43)**

(54) **SURFACE ROUGHNESS ANALYSIS**

ANALYSE DER OBERFLÄCHENRAUIGKEIT

ANALYSE DE RUGOSITÉ DE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2018 GB 201806168**

(43) Date of publication of application:
**24.02.2021 Bulletin 2021/08**

(73) Proprietor: **Additive Manufacturing Technologies
Limited
Sheffield, Yorkshire S9 1XU (GB)**

(72) Inventors:
• **RYBALCENKO, Konstantin
Sheffield Yorkshire S70 6TH (GB)**
• **GAIO, Andre
Sheffield Yorkshire S26 4TJ (GB)**
• **CRABTREE, Joseph Gwilliam
Sheffield Yorkshire S1 2JL (GB)**
• **SYAM, Wahyudin
Nottingham NG7 2TU (GB)**

• **LEACH, Richard
Nottingham NG7 2TU (GB)**

(74) Representative: **McWilliams, David John
Withers & Rogers LLP
2 London Bridge
London SE1 9RA (GB)**

(56) References cited:
**EP-A1- 2 244 059          CN-A- 105 354 405
US-A1- 2006 169 051**

• **CARLOS GOMEZ ET AL: "Optimization of
surface measurement for metal additive
manufacturing using coherence scanning
interferometry", OPTICAL ENGINEERING., vol.
56, no. 11, 25 July 2017 (2017-07-25),
BELLINGHAM, pages 111714, XP055599311,
ISSN: 0091-3286, DOI: 10.1117/1.OE.56.11.111714**

**EP 3 781 400 B1**

**(Cont. next page)**

- **ÖZEL TUGRUL ET AL: "Surface topography investigations on nickel alloy 625 fabricated via laser powder bed fusion", THE INTERNATIONAL JOURNAL OF ADVANCED MANUFACTURING TECHNOLOGY, SPRINGER, LONDON, vol. 94, no. 9, 4 October 2017 (2017-10-04), pages 4451 - 4458, XP036432205, ISSN: 0268-3768, [retrieved on 20171004], DOI: 10.1007/S00170-017-1187-Z**
- **WAHYUDIN P. SYAM ET AL: "In-process measurement of the surface quality for a novel finishing process for polymer additive manufacturing", PROCEDIA CIRP, vol. 75, 1 January 2018 (2018-01-01), NL, pages 108 - 113, XP055599219, ISSN: 2212-8271, DOI: 10.1016/ j.procir.2018.04.088**

(52) Cooperative Patent Classification (CPC): (Cont.)
G06T 2207/10056; G06T 2207/20076;
G06T 2207/20081; Y02P 10/25

## Description

The present invention relates to the analysis of an object's surface to determine a condition of the surface. In particular, but not exclusively, the present invention relates to a method and apparatus for analysing and categorising a surface condition, e.g. roughness, of an additively manufactured part.

Additive manufacturing (AM) is a process of joining materials to make objects from 3D model data, typically layer-upon-layer, as opposed to subtractive manufacturing techniques, such as milling or cutting. AM processes are generally classed according to the machines and technologies used, e.g. laser or extrusion, and the state of the raw material used, i.e. liquid-based, powder-based, or solid-based. The different processing conditions encountered in AM produce different mechanical properties and surface finishes, particularly compared to traditional manufacturing techniques. For example, the surface finish of injection moulding is determined by the mould, whereas the outer surface of AM parts has a rough feel and is visually dull as a result of the layer-upon-layer process. Such a surface finish is often undesirable, particularly if the part is intended for an aesthetic application. Furthermore, surface roughness may adversely affect the mechanical performance of the AM part, such as tear strength, tensile and/or bending strength, Young's modulus of the material, and fracture strain. Additionally, a rough surface finish may be difficult to clean, may stain easily, or may cause undesirable damage to adjacent parts in use. As such, AM parts are often post-processed after manufacture in an attempt to smooth the often undesirable rough outer surface and sometimes also to remove support structures used in the manufacturing process. It is therefore desirable to determine the roughness of an AM part, and in turn the amount of smoothing required to achieve a desired finish for a particular application, before the part is post-processed. Conventional surface measurement (e.g. roughness) methods require a considerable amount of time to produce results, especially for AM parts due to their diverse variety. Therefore, it is desirable to efficiently and accurately determine a surface condition of AM parts, particularly AM polymer parts having applications ranging from aerospace and automotive to consumer and medical, as part of an automated printing and/or smoothing process.

It is an aim of certain embodiments of the present invention to provide a non-contact system and method for efficiently, consistently and accurately determining a surface condition of an AM polymer part relative to a reference surface condition.

It is an aim of certain embodiments of the present invention to provide a non-contact system and method for analysing, recognising, and categorising a wide range of different polymer surfaces.

It is an aim of certain embodiments of the present invention to provide a non-contact system and method for providing surface information to a controller during part manufacture, such as AM part printing or post-processing.

According to a first aspect of the present invention there is provided a method of determining a condition of a surface of an additively manufactured polymer part, as defined in appended claim 1.

Optionally, the method further comprises:

calculating a test similarity value based on the test parameters; and
comparing the test similarity value with a predetermined reference similarity value to determine the condition of the surface of the additively manufactured polymer part.

Optionally, the reference similarity value is a limit of a reference range of a plurality of different reference ranges each corresponding to a different surface condition. Optionally, the method further comprises analysing the test parameters to determine a reduced dimension value.

Optionally, the reduced dimension value is between 2 and 54.

According to the invention, the method comprises normalising the captured image to remove illumination geometry and colour effects.

Optionally, the similarity value is calculated based on an angle between two similarity vectors or a Euclidian distance between the two similarity vectors.

According to a second aspect of the present invention there is provided a computer program as defined in appended claim 9.

According to a third aspect of the present invention there is provided a method of processing an additively manufactured polymer part, comprising:

determining a condition of a surface of an additively manufactured polymer part using the method according to the first aspect of the present invention; and
controlling apparatus for processing the additively manufactured polymer part responsive to the determined surface condition.

Optionally, the apparatus is for post-processing the additively manufactured polymer part.

According to a fourth aspect of the present invention there is provided a system for determining a condition of a surface of an additively manufactured polymer part, comprising:

image capturing apparatus; and
a controller configured to receive image data from the image capturing apparatus and perform the method according to the first aspect of the present invention.

## Description of the Drawings

Certain embodiments of the present invention will now be described with reference to the accompanying drawings in which:

Figure 1 illustrates a schematic of the system for determining a condition of a surface according to certain embodiments of the present invention;
Figure 2a illustrates a first side view of the microscopy device of the system of Figure 1;
Figure 2b illustrates a further side view of the microscopy device of Figure 2a;
Figure 3 illustrates a schematic cross section through the microscopy device of Figures 2a and 2b;
Figure 4 illustrates a flow diagram showing steps of a method for determining a condition of a surface according to certain embodiments of the present invention;
Figure 5 illustrates predefined surface condition types for Nylon-12 polymer samples;
Figure 6 illustrates predefined surface condition types for TPU polymer samples;
Figure 7 illustrates different grades/types of simulated surface images with different textures generated for validation purposes;
Figure 8 illustrates surface classification results of different grade Nylon-12 surfaces;
Figure 9 illustrates surface classification results of different grade TPU surfaces;
Figure 10 illustrates surface classification results of the different grade simulation images of Figure 7;
Figure 11 illustrates pixel sensitivity results; and
Figure 12 illustrates similarity dependence on noise results.

## Detailed Description

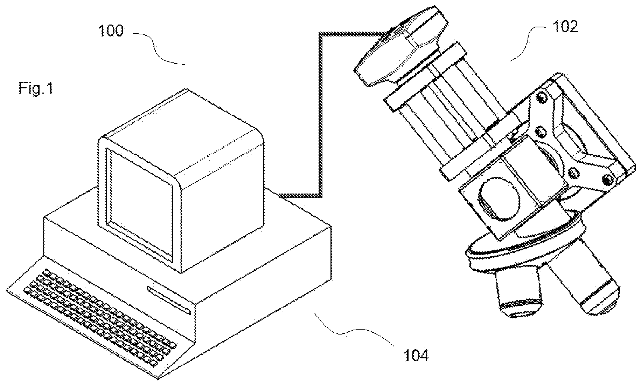

As illustrated in Figure 1, a system 100 according to certain embodiments of the present invention includes a metrology device 102 in wired or wireless communication with a controller 104, such as a desktop computer, laptop, tablet, and/or mobile phone configured to receive information from the metrology device 102 and to display a graphical user interface (GUI) to allow a user to interact with and control the metrology device 102. The metrology device 102 includes two main modules; a microscope module 200 and an illumination module 300.

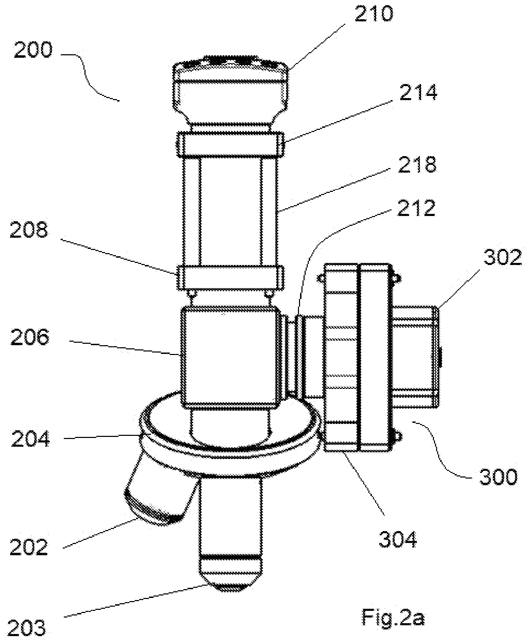

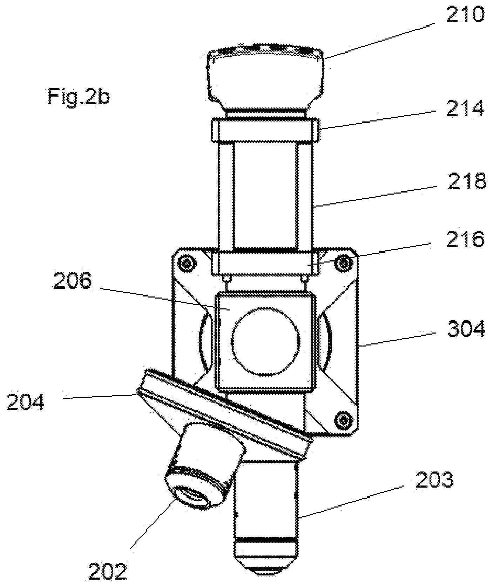

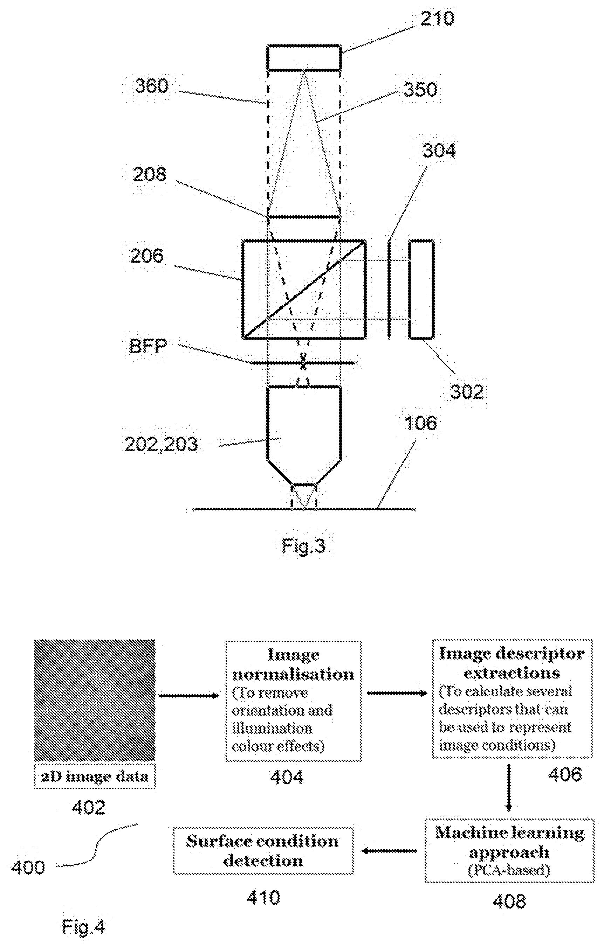

As illustrated in Figures 2a, 2b and 3, the microscope module 200 includes two infinity-corrected objective lenses 202,203 to individually magnify an image of an AM part surface 106 and form the surface image at infinity. The objective lenses provide 4x and 20x magnification respectively. The 4x objective lens 202 is used to capture high spatial wavelength features of a surface (surface form) and the 20x objective lens 203 is used to capture low spatial wavelength features of a surface (surface texture). Other suitable objective lens configurations, such as $10\times$ magnification, can also be envisaged. The microscope module 200 further includes an objective changer 204 to allow a user to select one of the objective lenses 202,203 based on the surface being imaged and analysed. The microscope module 200 further includes a beam splitter 206 coaxially located above the objective lenses 202,203 to direct light transmitted from the illumination module 300 to the AM part surface 106 and then to pass the reflected light from the surface to a camera 210 via a tube lens 208. The camera 210 includes a Complementary Metal Oxide Semiconductor (CMOS) sensor configured to capture an image of the AM part surface 106 and send the image to the controller 104 for processing as described further below. The camera 210 aptly has a resolution of around $1280 \times 1024$ pixels and a frame rate of around 30 fps, which can be increased to 200 fps with limited field of view. The camera 210 is a colour camera with progressive scan capability. The camera 210 is USB 2.0, or the like, configured for transferring data to the controller 104. The tube lens 208 has a focal length, $f$, of 60mm to form the image from the selected objective lens 202,203 to the CMOS sensor 210. A focal length of 60mm was selected to provide a relatively compact device with an overall length of less than 250mm but other suitable focal lengths and overall device sizes may be used depending on the desired application. The tube lens 208 is a doublet lens that can reduce chromatic aberration from the white light source of the illumination module 300. The tube lens 208 has a transmission spectrum from around 400 nm to around 700 nm. Other suitable camera and/or lens configurations can be envisaged without detracting from the scope of the present invention. The microscope module 200 also includes a coupler 212 to connect the axial illumination module 300 to the beam splitter 206 of the microscope module 200. The camera 210 and the tube lens 208 are each mounted in a respective cage block 214,216, and cage bars 218 connect the blocks 214,216 and in turn fix a distance between the camera and tube lens. The distance between the CMOS sensor and the tube lens is 60mm to correspond to the focal length, *f*, of the tube lens.

The illumination module 300 includes a white light source 302, e.g. an LED, to provide axial illumination to the surface 106 being imaged. A suitable LED may have a total power output of around 250mW with an intensity of around 3mW/cm$^2$. Aptly, the emission is filtered to have a spectrum of around 400 nm to 700 nm. A diffuser lens 304 is provided between the light source 302 and the beam splitter 206 to improve the distribution of light from the light source so that the light has a uniform illumination intensity across the field of view. The transmission spectrum of the diffuser lens 304 is around 380 nm to 1100 nm. The light source 302 and diffuser lens 304 are suitably mounted and coupled in a fixed spaced relationship to the beam splitter 206.

As illustrated in Figure 3, two light paths exist when the device 100 is in use. The solid lines 350 represent light passing from the light source 302 and into the beam splitter 206 to be reflected 90 degrees and directed substantially perpendicularly on to the surface 106 to be imaged. This light is then reflected back to the objective lens 202,203 and in view of the objective being infinity-corrected, the light beam coming from the objective is plane parallel. To form an image of the surface 106 from the parallel beam, the tube lens 208 is used to focus the parallel beam to the CMOS sensor of the camera 210. The CMOS sensor is spaced apart from the tube lens by 60mm since the focal length of the tube lens is 60mm. The back-focal plane (BFP) of the objective is also placed 60mm away from the tube lens, i.e. the BFP is coincident with the objective focal plane. The dashed lines 360 represent light that is reflected in parallel from the object surface 106 to the objective lens 202,203, which is then focussed on the BFP of the objective, and which is then made plane parallel to the CMOS sensor by the tube lens 208 (the ray coming from the focal plane of the tube lens).

A key principle of the method according to certain embodiments of the present invention is a machine learning approach where the controller is trained to recognise a particular set of surfaces. That is achieved by analysing and categorising the surface texture and patterns (surface descriptors). According to certain embodiments of the present invention, the results are used to categorise the surfaces into types (e.g. type 1, type 2, type 3, etc) to thereby determine whether or not the AM part has been processed (i.e. smoothed) or not, or if it requires further processing/smoothing. The controller uses these types as a reference to recognise a particular surface and assign that surface to an appropriate type.

A method of determining a surface condition of an AM part according to certain embodiments of the present invention includes a machine learning approach. Machine learning includes training and testing steps which are described further below.

Machine training is carried out to 'train' the algorithm to recognise a particular surface. The surface images used for the training process are taken at different locations across a polymer AM part of a certain material, to ensure unbiased training. The training data is stored and can later be referred to for recognition of that particular surface, i.e. machine training only needs performing once.

The testing procedure is surface recognition of the parts using already prepared training data. The testing is done to confirm the training data is sufficient to recognise the particular surface. From the testing step, a decision can be made whether the training process is enough or needs more training process (with more training data or a different training parameter, i.e. numbers of reduced dimension).

The machine learning calculations according to certain embodiments of the present invention are carried out in the following way:

Firstly, the controller 104 is trained to recognise particular surfaces and/or particular surface conditions: each of a plurality of descriptor parameters X (as listed below) is evaluated by its variance (Eigen values $\lambda$) and covariance (S). The averaged parameter $\overline{X}$ is first calculated, followed by the matrix covariance:

$$\overline{\mathbf{X}}_{m1} = \frac{1}{N} \sum_{n=1}^{N} \mathbf{X}_{mn}$$

$$\mathbf{S}_{mm} = \frac{1}{N} \sum_{n=1}^{N} (\mathbf{X}_{mn} - \overline{\mathbf{X}}_{m1})(\mathbf{X}_{mn} - \overline{\mathbf{X}}_{m1})^T$$

After that, variance (Eigen values $\lambda$) of the projected data is calculated:

$$\frac{1}{N}\sum_{n=1}^{N}\left\{\mathbf{u}_{mk}^{T}\mathbf{X}_{mn} - \mathbf{u}_{mk}^{T}\overline{\mathbf{X}}_{m1}\right\}^{2} = \mathbf{u}_{mk}^{T}\,\mathbf{S}_{mm}\mathbf{u}_{mk}$$

Hence:

$$\mathbf{S}_{mm}\mathbf{u}_{mk}=\lambda\mathbf{u}_{mk}$$

$$\mathbf{u}_{mk}^{T}\mathbf{S}_{mm}\mathbf{u}_{mk}=\lambda$$

- Variance will be maximum when the Eigen vectors corresponds to the largest Eigen values $\lambda$.
- $\lambda$ is a $m \times m$ diagonal matrix.

where $N$ is the number of training data (the initial set of data used to train the machine, at least 100 training data is recommended), m is dimension of each data, S is variance-covariance matrix, $\lambda$ is Eigen values of S, $U_{mk}$ is Eigen vectors of S, and $K$ is reduced dimension. The latter parameter reduced dimension is the number of principal components (PC) that are to be considered, therefore reduced dimension can be any number between 2 and 54 (see 54 surface descriptors listed below). The larger the number of the reduced dimension, the better the learning process for the surface detection capability. However, the larger the number of the reduced dimension, the longer the training time. It has been found that a reduced dimension of around 10 is optimum.

After the Eigen values are calculated, the descriptors $X$ are used to define the similarity of the surfaces. Firstly, weight matrix $\omega_k$ is calculated:

$$\omega_k = \boldsymbol{u}_{k1}^{T}(\mathbf{X}_{m1} - \overline{\mathbf{X}}_{m1})$$

Weight matrices of different parameters together form similarity vector $\varphi_k^{T}$ :

$$\boldsymbol{\varphi}_k^{T} = [\omega_1, \omega_2, \dots, \omega_k]$$

Finally, the similarity of two surfaces can be calculated in two ways:

1. Angle between two similarity vectors:

$$\text{Similarity value} = \cos\theta = \frac{\varphi_0 \bullet \varphi_k}{|\varphi_0||\varphi_k|}$$

Maximum value of cos $\theta$ = 1 for perfect match between two surfaces.
2. Euclidian distance between two similarity vectors:

$$\text{Similarity value} = \sqrt{(\boldsymbol{\varphi}_0 - \boldsymbol{\varphi}_k)^2}$$

Minimum value is 0 for perfect match between two surfaces.

After the above 'training' steps, the controller saves files consisting of the Eigen values and vectors of S matrix, and similarity values for each type of AM polymer surface and then uses these training files to recognise and categorise surfaces.

The obtained similarity values are categorised according to the defined threshold value, e.g. if the similarity value falls below the defined threshold, the surface is categorised to be the same type with respect to a reference surface. The threshold value is defined as five times the value of similarity value defined from the training process. Surfaces can also be categorised according to the reference threshold value, e.g. a surface with a similarity of 0.4 - 0.6 compared to a 'Type 1' surface may be assigned to be a 'Type 2' surface; a similarity of 0.2 - 0.4 may be assigned to be a 'Type 3' surface; and a similarity of 0.05 - 0.2 may be assigned to be a 'Type 4' surface, etc. wherein the different 'types' of reference surface may be categorised with respect to their surface roughness, for example.

At this stage the testing step is done to confirm surfaces can be recognised from the gathered training data. If needed, the training can be repeated with higher number of training data *N*.

In use, the machine learning process is as follows:

1. The metrology device 102 is located such that the camera 210 is facing the AM polymer part to be analysed at its focus position;
2. The focus of the surface image is adjusted by positioning the camera measured surface at the focal distance of the objective lens 202,203 of the microscope 200 and the natural colour of the image is maximized by adjusting the camera setting via the Graphical User Interface (GUI) provided on a display of the computing device/controller 104;
3. A machine learning button is pressed via the GUI and the learning process starts:

a. The number of images to be learned is acquired from the user or as an input signal from a control unit of a post-processing machine;
b. Images of the AM polymer surface 106 are captured;
c. Image normalization is performed;
d. Image parameters are calculated [machine learning parameter_1 (), machine learning parameter_2 (),....] (see equations and list of parameters above);
e. PCA is performed and similarity values are derived (see equations above);
f. Similarity threshold is acquired from the user to define the limits for the surface to be categorized as the same or different surface type compared to a reference surface;
g. Average image and similarity threshold are saved to two different *.txt text files [machine_learning_save_reference_data()] and [machine learning save similarity_threshold()];
h. Once the required number of files (images) is produced (based on the number acquired at step a), the machine learning is stopped; and
i. Optionally, an information message notifying the user that the process has finished can be provided by the controller visually and/or audibly.

A method 400 of 'recognising' a surface condition of an AM part will now be described in more detail with reference to Figure 4. At step 402, 2D image data of the surface 106 is captured by the CMOS sensor of the metrology device 102 as illustrated in Figure 3. The image data is sent to the controller by wired or wireless communication and, at step 404, is normalized. Normalization is performed to remove the variation of illumination geometry and illumination colour. Conventional normalization methods include histogram equalisation and gamma illumination correction.

At step 406, a plurality of descriptors is determined based upon the normalized image data. The controller and method are configured to detect and analyse 54 different parameters, or 'surface descriptors', which are correlated to different surface conditions (see machine learning process described above). The parameters are divided into two groups: colour-related (17 parameters) and texture-related (37 parameters). These are as follows:

Colour-related Parameters:

1. Mean of RED colour channel of the image
2. Mean of GREEN colour channel of the image
3. Mean of BLUE colour channel of the image
4. Standard deviation of RED colour channel of the image
5. Standard deviation of GREEN colour channel of the image
6. Standard deviation of BLUE colour channel of the image
7. Mean of grey pixel value of the grey version of the image
8. Standard deviation of grey pixel value of the grey version of the image
9. Histogram entropy of the RED channel of the image
10. Histogram entropy of the GREEN channel of the image
11. Histogram entropy of the BLUE channel of the image
12. Mean of HUE value of the Hue Saturation Value (HSV)-converted image
13. Standard deviation of HUE value of the HSV-converted image
14. Mean of SATURATED value of the HSV-converted image
15. Standard deviation of SATURATED value of the HSV-converted image

16. Mean of VALUE value of the HSV-converted image

17. Standard deviation of VALUE value of the HSV-converted image

Texture-related Parameters:

1. Focus measure of the image

2. Number of blobs element from the binary version of the image

3. The biggest size of blob from the binary version of the image

4. The smallest size of blob from the binary version of the image

5. Mean of the area of all blobs

6. Standard deviation of the area of all blobs

7. Maximum diameter of the blobs

8. Minimum diameter of the blobs

9. Mean diameter of the blobs

10. Standard deviation diameter of the blobs

11. Maximum ratio between the pixel inside the blob and the pixel inside the bounding box of the blobs

12. Minimum ratio between the pixel inside the blob and the pixel inside the bounding box of the blobs

13. Mean ratio between the pixel inside the blob and the pixel inside the bounding box of the blobs

14. Standard deviation ratio between the pixel inside the blob and the pixel inside the bounding box of the blobs

15. Mean of the absolute value of the Fourier image

16. Standard deviation of the absolute value of the Fourier image

17. Mean of the phase value of the Fourier image

18. Standard deviation of the phase value of the Fourier image

19. Mean of pixel value of the grey hue, saturated and value (HSV)-converted image

20. Standard deviation of pixel value of the grey HSV-converted image

21. Local edge descriptor: number of horizontal edge

22. Local edge descriptor: number of vertical edge

23. Local edge descriptor: number of 45° edge

24. Local edge descriptor: number of 135° edge

25. Local edge descriptor: number of other edge

26. Binary local pattern: mean of symmetric covariance (SCOV) measure parameter value

27. Binary local pattern: standard deviation of SCOV parameter value

28. Binary local pattern: mean of symmetric auto-correlation measure (SAC) parameter value

29. Binary local pattern: standard deviation of SAC parameter value

30. Binary local pattern: mean of local variance (VAR) parameter value

31. Binary local pattern: standard deviation of VAR parameter value

32. Binary local pattern: mean of symmetric variance ratio (SVR) parameter value

33. Binary local pattern: standard deviation of SVR parameter value

34. Binary local pattern: mean of local binary pixel pattern (LBP) parameter value

35. Binary local pattern: standard deviation of LBP parameter value

36. Binary local pattern: mean of local binary pixel pattern rotation-invariant (LBPROT) parameter value

37. Binary local pattern: standard deviation of LBPROT parameter value

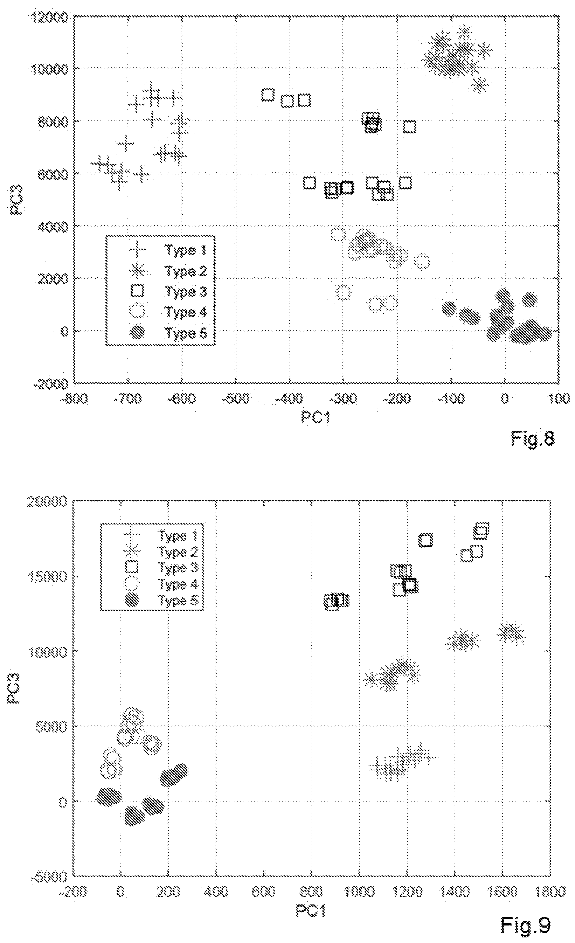

At step 408, the above descriptors are analysed according to the Principle Component Analysis (PCA) method which is an unsupervised learning method which reduces the dimensionality of data. The reduced data is plotted along its principal axes (as shown in Fig 8-10). PCA maximises variance in data along their principal axes.
At step 410, the analysed data is compared against different stored training data and in case of a match, the surface is "recognised" to be of a particular type.

**Example**

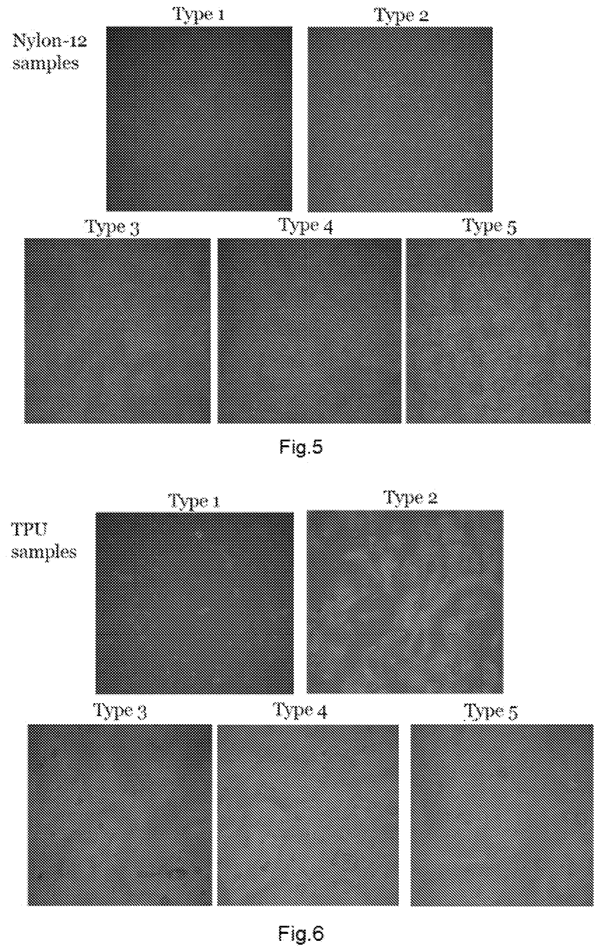

A method of analysing and categorising an AM polymer part will now be described by way of example only to further describe certain embodiments of the present invention.
Nylon-12 and thermoplastic polyurethane (TPU) parts having different surface grades (rough to smooth: Type 1, Type 2, Type 3, Type 4 and Type 5, see Figures 5 and 6) are used, wherein the Type 5 surface is used as a reference.
First, the machine learning process is carried out as described above to produce similarity values with respect to the reference surface (Type 5 in this example). The obtained parameters are stored as a .txt file named "Material_learning_data", for example "Polyamide12_learning_data".
After the parameters representing the different surface conditions are stored, in for example a memory of the controller 104, the system 100 can then be used to recognise the surfaces of an AM part made from the same material as the part used during learning process:

1. Stored reference learning data, including reference similarity values, is retrieved by the controller;
2. A signal is received from the user or a control unit of a post-processing machine to start the surface detection process;
3. The focus of the image is adjusted by the user via the Graphical User Interface (GUI) of the controller;
4. Images are captured by the CMOS sensor and received by the controller;
5. Image normalization is performed;
6. Image parameters are calculated (see parameter list above);
7. PCA is performed;
8. Similarity values for the obtained images are calculated;
9. The similarity value is compared to the reference similarity values of the retrieved reference learning data. If the similarity value falls below a certain threshold level, then the controller recognizes the surface and assigns it to the predefined category (Type 1, Type 2, etc. see Figures 8 and 9 for Nylon-12 and TPU respectively); and
10. The controller informs the user via the GUI, or the control unit, on the assigned surface category. Optionally, the assigned surface category may be logged/stored.

The system and method according to certain embodiments of the present invention may aptly be used on an AM polymer part after or during a controlled post-processing, e.g. smoothing, operation to determine the surface condition of the AM part and in turn the amount of processing required to achieve a desired surface condition. For example, if the desired surface roughness has not been achieved, the processing parameters of a controlled post-processing operation may be adjusted responsive to feedback from the controller 104 of the system 100 to a control unit of the post-processing apparatus and the AM part/s may be processed again until the desired surface condition is achieved. Such feedback may also allow the post-processing apparatus to learn and improve in terms of efficiency and automation.

**Validation**

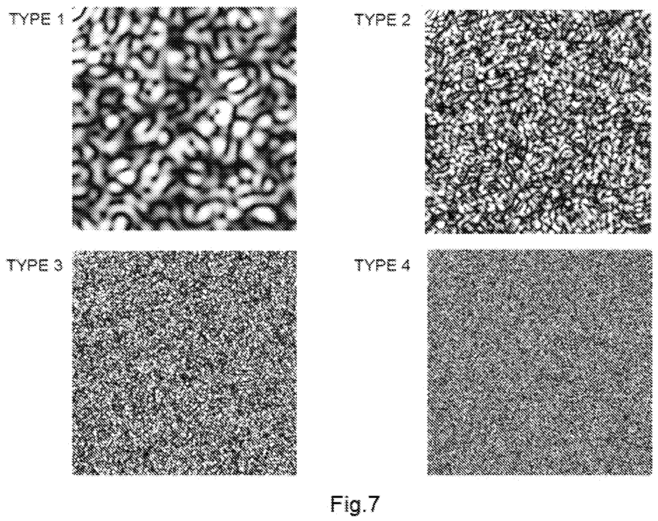

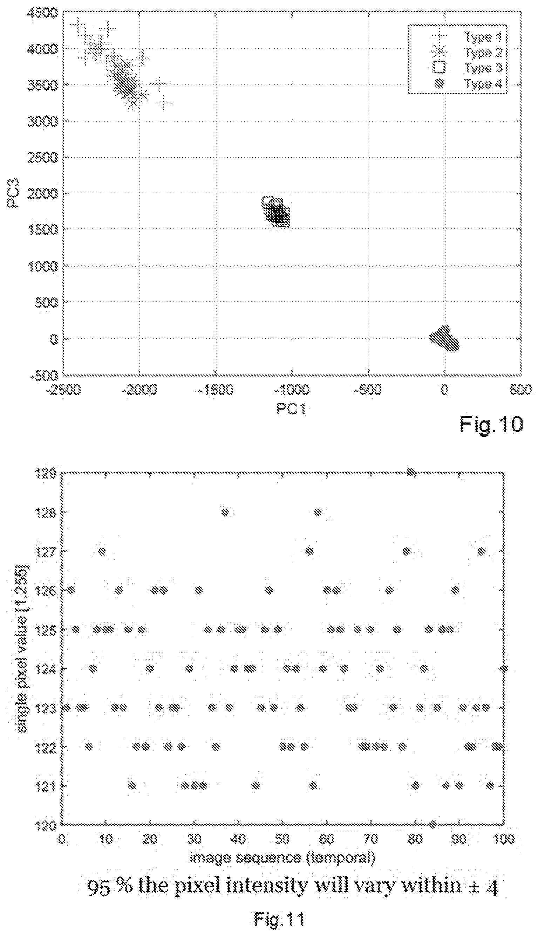

For validation and calibration purposes, four different simulated surfaces representing surfaces with different features, and in turn different surface conditions, were generated and analysed (see Figure 7). This demonstrates that different surfaces can be distinguished by the surface describing parameters in the PCA space according to certain embodiments of the present invention. Type 1 surface was considered rough (non-processed), whereas Type 4 was considered smooth (processed). Type 2 and Type 3 surfaces fall in between Type 1 and Type 4. Type 4 surface was taken as a reference surface to be compared to all other surfaces. The results of the surface classification are shown in Figure 10. The spatial difference along the parameter axis allows a user and/or the controller to distinguish between the surfaces. It can be seen in Figure 10 that by using PC3 and PC1 (see algorithms above) the surfaces can be well distinguished.

**Sensitivity**

Testing of the pixel noises of the CMOS sensor was done to understand the impact of such noises on the measurements. Each CMOS sensor pixel can have a value between 0 and 255, and the aim is to monitor the noise of each pixel. The pixel intensity on the CMOS sensor was recorded overtime. In total 100 pixel intensities were recorded successively. The results of the sensitivity test are illustrated in Figure 11. It can be seen that the pixel noise is around $\pm 4$ pixel value (95% confidence interval).

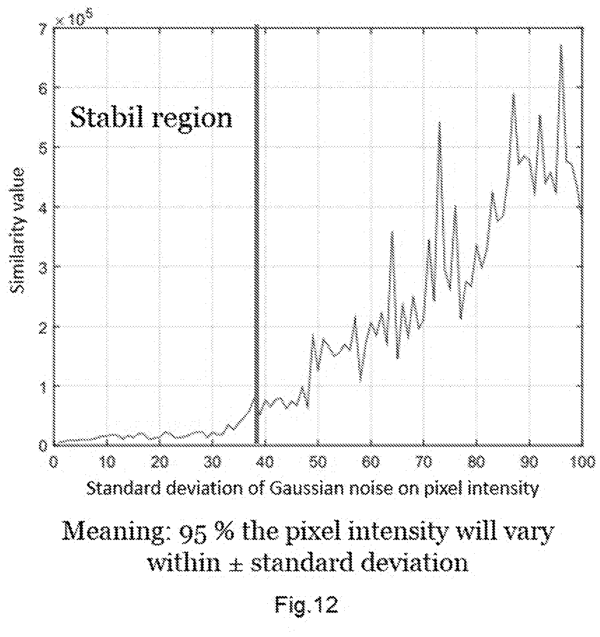

The effect of pixel intensity noise on the calculation of the similarity value was also measured. Such a test was carried out by selecting Type 4 image (see Figure 7) and applying varying levels of noise on the image pixels. The results are illustrated in Figure 12. A considerable increase in similarity value (decrease in image similarity) can be observed at a pixel noise of around 50. Therefore, pixel noise of around $\pm 4$ pixel value does not significantly impact similarity value and also the measurement results.

The method according to certain embodiments of the present invention uses unique parameters associated with different surface conditions of a wide variety of AM polymers to recognise and categorise the surface. Such polymers include, for example, Polyamide 6, Polyamide 11, Polyamide 12, Thermoplastic polyurethane (TPU), Polycarbonate (PC), Acrylonitrile butadiene styrene (ABS), Acrylonitrile styrene acrylate (ASA), Polypropylene (PP), Polyvinylidene fluoride (PVDF), Polyphenylene sulphide (PPS), Polyether ether ketone (PEEK), Ethylene propylene rubber (EDPM), Nitrile rubber (NBR), and Thermoplastic elastomers (TPE), or the like.

Certain embodiments of the present invention therefore provide a system and method for efficiently, consistently and accurately determining a surface condition, such as surface roughness, of an AM polymer part in a non-contacting manner. The determination of the surface condition may be used as a feedback signal for improved control of a printing and/or post-processing operation such as controlled smoothing of an AM part. The controller of the system may also be self-learning to promote improved part surface detection and categorisation over time. The system and method are able to identify various surfaces of materials without requiring any knowledge about a specific feature/s of the surface to detect. The surface condition of a part can be determined within 3-4 seconds and the system can be integrated into additive manufacturing apparatus for in-line surface condition monitoring during pre- or post-processing operations for improved part manufacture, finishing and quality.

**Claims**

1.    A method of determining a condition of a surface of an additively manufactured polymer part, comprising:

> capturing an image of a surface of an additively manufactured polymer part;
> normalising the captured image to remove illumination geometry and illumination colour;
> extracting a plurality of test parameters, the test parameters comprising colour parameters and texture parameters respectively relating to a colour and a texture of the surface of the additively manufactured polymer part from the captured image; and
> determining the condition of the surface of the additively manufactured polymer part based on the test parameters extracted from the captured image, wherein the test parameters are each evaluated using Principle Component Analysis.

**2.** The method according to claim 1, further comprising:

> calculating a test similarity value based on the test parameters; and
> comparing the test similarity value with a predetermined reference similarity value to determine the condition of the surface of the additively manufactured polymer part.

**3.** The method according to claim 2, wherein the reference similarity value is a limit of a reference range of a plurality of different reference ranges each corresponding to a different surface condition.

**4.** The method according to claim 2, wherein the similarity value is calculated based on an angle between two similarity vectors or a Euclidian distance between the two similarity vectors.

**5.** The method according to any preceding claim, further comprising analysing the test parameters to determine a reduced dimension value.

**6.** The method according to claim 5, wherein the reduced dimension value is between 2 and 54, and preferably wherein the reduced dimension value is approximately 10.

**7.** The method according to any preceding claim, wherein the surface condition is roughness.

**8.** The method according to any preceding claim, wherein the image data is 2D image data, and preferably wherein the 2D image data is obtained using a CMOS sensor.

**9.** A computer program executable on a computing device to perform the method according to any preceding claim, wherein the computing device comprises an image capturing apparatus (210).

**10.** A method of processing an additively manufactured polymer part, comprising:

> determining a condition of a surface of an additively manufactured polymer part using the method according to any of claims 1 to 8; and
> controlling apparatus for processing the additively manufactured polymer part responsive to the determined surface condition.

**11.** The method according to claim 10, wherein the apparatus is for post-processing the additively manufactured polymer part.

**12.** A system (100) for determining a condition of a surface of an additively manufactured polymer part, comprising:

> image capturing apparatus (210); and
> a controller (104) configured to receive image data from the image capturing apparatus (210);
> wherein the system is configured to perform the method according to any of claims 1 to 8.

**Patentansprüche**

**1.** Verfahren zum Bestimmen einer Beschaffenheit einer Oberfläche eines additiv gefertigten Polymerteils, umfassend:

> Aufnehmen eines Bildes von einer Oberfläche eines additiv gefertigten Polymerteils;
> Normalisieren des aufgenommenen Bildes zum Entfernen von Beleuchtungsgeometrie und Beleuchtungsfarbe;
> Extrahieren einer Mehrzahl von Testparametern aus dem aufgenommenen Bild, wobei die Testparameter Farbparameter und Texturparameter umfassen, die sich jeweils auf eine Farbe und eine Textur des additiv gefertigten Teils beziehen; und
> Bestimmen der Beschaffenheit der Oberfläche des additiv gefertigten Polymerteils basierend auf den aus dem aufgenommenen Bild extrahierten Testparametern, wobei die Testparameter jeweils durch Anwenden der Hauptkomponentenanalyse ausgewertet werden.

**2.** Verfahren nach Anspruch 1, ferner umfassend:

Berechnen eines Test-Ähnlichkeitswerts basierend auf den Testparametern; und

Vergleichen des Test-Ähnlichkeitswerts mit einem vorgegebenen Referenz-Ähnlichkeitswert, um die Beschaffenheit der Oberfläche des additiv gefertigten Polymerteils zu bestimmen.

3. Verfahren nach Anspruch 2, wobei der Referenz-Ähnlichkeitswert ein Referenzbereich einer Mehrzahl von verschiedenen Referenzbereichen ist, deren jeder einer anderen Oberflächenbeschaffenheit entspricht.

4. Verfahren nach Anspruch 2, wobei der Ähnlichkeitswert basierend auf einem Winkel zwischen zwei Ähnlichkeitsvektoren oder einem euklidischen Abstand zwischen den beiden Ähnlichkeitsvektoren berechnet wird.

5. Verfahren nach einem der vorangehenden Ansprüche, ferner umfassend das Analysieren der Testparameter zum Bestimmen eines verringerten Dimensionswerts.

6. Verfahren nach Anspruch 5, wobei der verringerte Dimensionswert zwischen 2 und 54 liegt und der verringerte Dimensionswert bevorzugt etwa 10 beträgt.

7. Verfahren nach einem der vorangehenden Ansprüche, wobei die Oberflächenbeschaffenheit die Rauheit ist.

8. Verfahren nach einem der vorangehenden Ansprüche, wobei die Bilddaten 2D-Bilddaten sind und wobei bevorzugt die 2D-Bilddaten mit einem CMOS-Sensor erfasst werden.

9. Auf einer Computervorrichtung ausführbares Computerprogramm zur Durchführung des Verfahrens nach einem der vorangehenden Ansprüche, wobei die Computervorrichtung eine Bildaufnahmevorrichtung (210) umfasst.

10. Verfahren zur Bearbeitung eines additiv gefertigten Polymerteils, umfassend:

Bestimmen einer Beschaffenheit einer Oberfläche eines additiv gefertigten Polymerteils unter Anwendung des Verfahrens nach einem der Ansprüche 1 bis 8; und

eine Steuervorrichtung zum Bearbeiten des additiv gefertigten Polymerteils in Reaktion auf die bestimmte Oberflächenbeschaffenheit.

11. Verfahren nach Anspruch 10,
wobei die Vorrichtung zur Nachbearbeitung des additiv gefertigten Polymerteils dient.

12. System (100) zum Bestimmen einer Beschaffenheit einer Oberfläche eines additiv gefertigten Polymerteils, umfassend:

eine Bildaufnahmevorrichtung (210); und

eine Steuervorrichtung (104), die eingerichtet ist für den Empfang von Bilddaten von der Bildaufnahmevorrichtung (210) ;

wobei das System konfiguriert ist für die Durchführung des Verfahrens nach einem der Ansprüche 1 bis 8.

**Revendications**

1. Procédé pour déterminer l'état d'une surface d'une pièce en polymère de fabrication additive consistant à :

- saisir l'image d'une surface de pièce de polymère de fabrication additive,
- normaliser l'image saisie pour enlever la géométrie d'éclairage et la couleur d'éclairage,
- extraire un ensemble de paramètres de test, ces paramètres de test comprenant des paramètres de couleur et des paramètres de texture liés respectivement à une couleur et à une texture de surface de la pièce en polymère de fabrication additive à partir de l'image saisie, et
- déterminer l'état de la surface de la pièce de polymère de fabrication additive en se fondant sur les paramètres de test extraits de l'image saisie,
- les paramètres de test étant évalués chacune en utilisant l'analyse en composantes principales.

2. Procédé selon la revendication 1,
consistant en outre à :

- calculer une valeur de similarité de test fondée sur les paramètres de test, et
- comparer la valeur de similarité de test à une valeur de similarité de référence, prédéterminée pour déterminer l'état de la surface de la pièce en polymère de fabrication additive.

3. Procédé selon la revendication 2,
selon lequel
la valeur de similarité de référence est la limite d'une plage de référence d'un ensemble de plages de référence, différentes, correspondant chacune à un état de surface différent.

4. Procédé selon la revendication 2,
selon lequel
la valeur de différence calculée en se fondant sur l'angle entre deux vecteurs de similarité la distance euclidienne entre deux vecteurs de similarité.

5. Procédé selon l'une quelconque des revendications précédentes, consistant en outre à assimiler les paramètres de test pour déterminer une valeur de dimension réduite.

6. Procédé selon la revendication 5,
selon lequel
la valeur de dimension réduite est comprise entre 2 et 54, et de préférence la valeur de dimension réduite est approximativement 10.

7. Procédé selon l'une quelconque des revendications précédentes, selon lequel
l'état de surface est la rugosité.

8. Procédé selon l'une quelconque des revendications précédentes, dans lequel
les données d'images sont les données d'images 2D et de préférence les données d'images 2D obtenues avec un capteur CMOS.

9. Programme d'ordinateur exécutable sur un calculateur pour effectuer le procédé selon l'une quelconque des revendications précédentes,
le calculateur comprenant un appareil de saisie d'images (210).

10. Procédé de traitement d'une pièce en polymère de fabrication additive consistant à :

- déterminer un état de surface d'une pièce en polymère de fabrication additive en utilisant le procédé selon l'une quelconque des revendications 1 à 8, et
- contrôler l'appareil de traitement de la pièce en polymère de fabrication additive en fonction à l'état de surface déterminé.

11. Procédé selon la revendication 10,
selon lequel
l'appareil est pour le poste de traitement pour la pièce en polymère de fabrication additive.

12. Système (100) pour déterminer un état de surface d'une pièce en polymère de fabrication additive comprenant :

- un appareil de saisie d'images (210), et
- un contrôleur (104) configuré pour recevoir les données d'images de l'appareil de saisie d'images (210),
- le système étant configuré pour exécuter le procédé selon l'une quelconque des revendications 1 à 8.

Fig.1

Fig.2a

Fig.2b

210

360

350

304

208

206

302

BFP

202,203

106

Fig.3

2D image data

402

400

**Image normalisation**
(To remove orientation and illumination colour effects)

404

**Image descriptor extractions**
(To calculate several descriptors that can be used to represent image conditions)

406

**Surface condition detection**

410

**Machine learning approach**
(PCA-based)

408

Fig.4

Nylon-12
samples

Type 1

Type 2

Type 3

Type 4

Type 5

Fig.5

TPU
samples

Type 1

Type 2

Type 3

Type 4

Type 5

Fig.6

TYPE 1 TYPE 2 TYPE 3 TYPE 4

Fig.7

Fig.8

Fig.9

Fig.10

95 % the pixel intensity will vary within ± 4

Fig.11

Meaning: 95 % the pixel intensity will vary
within ± standard deviation

Fig.12